# EUROPEAN PATENT APPLICATION

(11) **EP 0 707 421 A2**
(43) Date of publication of application: **17.04.1996**
(21) Application number: 95402252.1
(22) Date of filing: 09.10.1995
(51) Int. Cl.: H04N 5/44

(54) **Screen automatic expanding display apparatus for wide screen television**

(30) Priority: 11.10.1994 KR 9426007
(71) Applicant: L G ELECTRONICS INC., Seoul (KR)
(72) Inventor: Park, Man-Hyo, Kwachon, Kyungki-Do (KR); Park, Jung-Suk, Seoul (KR)
(74) Representative: Fort, Jacques

(57) **Abstract**

An improved screen automatic expanding display apparatus for a wide screen television capable of detecting a wide screen signal and a character signal from a broadcasting station, moving the character signal to an active video region, and automatically expanding and displaying a reflection, which includes a trapping circuit (206) for removing a carrier component of a color signal from an externally applied combined picture signal so as to extract a brightness signal; a clamping circuit (207) for outputting a brightness signal having a predetermined level outputted from the trapping circuit; a level comparison circuit (208) for comparing the brightness signal outputted from the clamping circuit with a reference voltage; and a signal judging circuit (209) for judging a wide screen signal type contained in the combined picture signal outputted in accordance with a signal outputted from the level comparison circuit, for transmitting a control signal corresponding to the judgement to a deflection controller (202), and for varying horizontal and vertical synchronous signals, so that a watcher of the television can enjoy quality resolution by improving the resolution of the screen.

## Description

### BACKGROUND OF THE INVENTION

### 1. Field of the Invention

The present invention relates to a screen automatic expanding display apparatus for a wide screen television capable of automatically expanding a reflection, and in particular to an improved screen automatic expanding display apparatus for a wide screen television capable of detecting a wide screen signal and a character signal from a broadcasting station, moving the character signal to an active video region, and automatically expanding and displaying a reflection.

### 2. Description of the Conventional Art

Conventionally, in the systems of an National Television System Committee and a Phase alternation by Line, the conventional screen automatic expanding display apparatus for a wide screen television is directed to providing a letter box at the lower portion of the screen with a screen aspect ratio 3 to 4 by making the upper and lower portions black and to transmitting pictures in the above-mentioned form, thus preventing the distortion of the screen when receiving a 16-to-9 screen picture signal at a television with a 4-to-3 screen.

However, as the technologies of a wide screen television is developed, it is necessary to display the 16-to-9 screen picture on a wide screen television.

Therefore, in the industry, the 4-to-3 screen program and the 16-to-9 screen program are increasingly developed so as to service the programs at a proper ratio therebetween.

In addition, it is necessary to automatically detect which signal is for the 4-to-3 screen program or for the 16-to-9 screen program, and to expand the screen in accordance with a corresponding program.

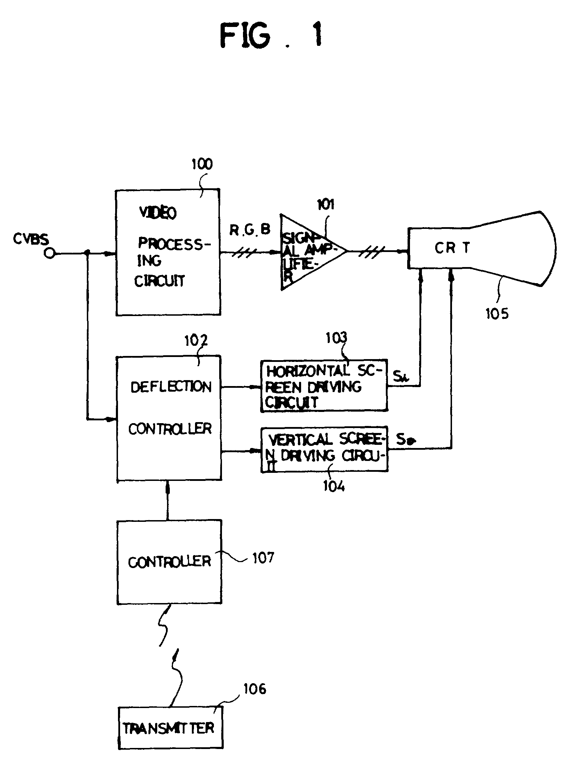

Referring to Fig. 1, the conventional screen automatic expanding display apparatus for a wide screen television includes a video signal processing circuit 100 for dividing a combined picture signal CVBS applied from a broadcasting station into a brightness signal and a color signal, decoding the color signal, and outputting an R, G, and B color signal through a matrix, a signal amplifier 101 for amplifying the R, G, and B color signal to a gain value, a deflection adjusting circuit 102 for dividing the combined picture signal CVBS outputted from the video signal processing circuit 100 into a horizontal synchronous signal H_{syn} and a vertical synchronous signal V_{syn}, a horizontal driving circuit 103 for converting the horizontal synchronous signal H_{syn} divided by the deflection adjusting circuit 102 into a horizontal deflection signal Sₕ, a vertical driving circuit 104 for converting the vertical synchronous signal V_{syn} divided by the deflection adjusting circuit 102 into a vertical deflection signal Sᵥ, a cathode-ray tube 105 for deflecting the R, G, and B signal amplified by the signal amplifier 101 in accordance with horizontal and vertical deflection signals Sₕ and Sᵥ outputted from the horizontal and vertical driving circuits 103 and 103, a transmitter 106 for converting a display mode by a key operation so as to change the display state of the cathode-ray tube 105, and a deflection controller 107 for recognizing an infrared ray code outputted from the transmitter 106 and for a horizontal synchronous signal H_{syn} and a vertical synchronous signal V_{syn}, respectively.

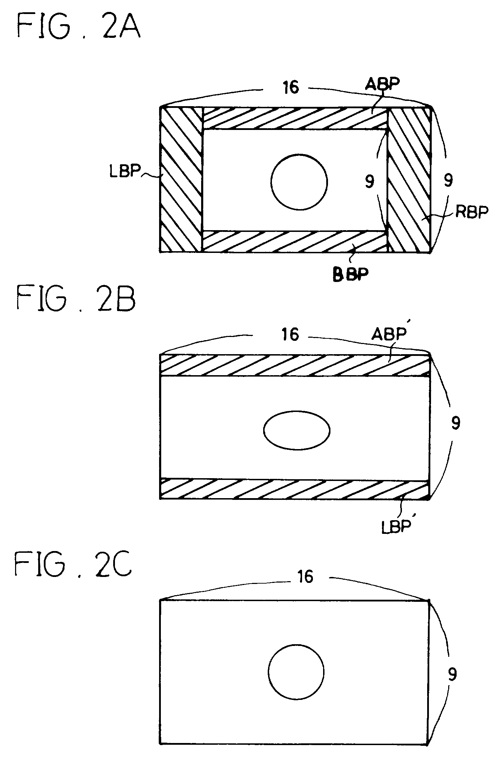

The operation of the conventional screen automatic expanding display apparatus for a wide screen television will now be explained with reference to Figs. 2A through 2C.

To begin with, when a combined picture signal CVBS signal is inputted into the video processing circuit 100 and the deflection controller 102, the video processing circuit 100 separates the combined picture signal CVBS into a brightness signal and a color signal, and decodes the brightness signal and the color signal into an original color signal, and processes the signals into an R, G, and B color signal through a matrix (not shown), and transmits the signals to the signal amplifier 101.

Thereafter, the signal amplifier 101 amplifiers the R, G, and B signal outputted from the video processing circuit 100 to have a predetermined value so as to display on a screen.

Meanwhile, the deflection controller 102 separates the combined picture signal CVBS into a horizontal synchronous signal H_{syn,} and a vertical synchronous signal V_{syn} and inputs the signals into the horizontal screen driving circuit 103 and the vertical screen driving circuit 104.

Here, the horizontal screen driving circuit 103 and the vertical screen driving circuit 104 converts the horizontal synchronous signal H_{syn,} and the vertical synchronous signal V_{syn,} into a horizontal deflection signal Sₕ and a vertical deflection signal Sᵥ and inputs the signals into the cathode-ray tube 105.

Therefore, the cathode-ray tube 105 deflects the R, G, and B color signals outputted from the signal amplifier 101 in accordance with horizontal and vertical deflection signals Sₕ and Sᵥ outputted from the horizontal and vertical screen driving circuits 103 and 104 in horizontal and vertical directions, respectively, so that a screen with a 16-to-9 aspect ratio can be achieved.

That is, when displaying a 16-to-9 combined picture signal CVBS on a screen without a deflection adjustment, the signals, as shown in Fig. 2A, are displayed on the screen in a form of a letter box with block regions ABP, BBP, LBP, and RBP.

In addition, if a user, as shown in Fig. 2B, wants to expand the screen in a horizontal direction, it is needed to delete the left and right black side regions of the screen. That is, so as to expand the screen in a horizontal direction, the user inputs a horizontal screen expanding mode key provided in a remote controller (not shown).

Thereafter, when the user, as shown in Fig. 2B, inputs the horizontal screen expanding mode key, the transmitter 106 converts the signal inputted thereto into an infrared ray code signal and transmits the code to the deflection controller 107.

In addition, the deflection controller 107 recognizes the infrared ray code signal and outputs a corresponding horizontal screen expanding control signal to the deflection controller 102.

However, the deflection controller 102 outputs the vertical synchronous signal V_{syn,} of the horizontal synchronous signal H_{syn} and the vertical synchronous signal V_{syn,} separated from the combined picture signal CBVS in accordance with a horizontal screen expanding control signal outputted from the deflection controller 107 and outputs the signal to the vertical screen driving circuit 104, and it expands the horizontal synchronous signal H_{syn} thereof and outputs the signal to the horizontal screen driving circuit 103.

Thereafter, the horizontal screen driving circuit 103 converts the horizontal synchronous signal H_{syn} outputted from the deflection controller 102 into the horizontal deflection signal Sₕ and outputs the signal to the cathode-rat tube 105.

In addition, the vertical screen driving circuit 104 converts the vertical synchronous signal V_{syn,} into the vertical deflection signal Sᵥ and outputs the signal to the cathode-ray tube 105.

Therefore, the cathode-ray tube 105 displays the R, G, and B color signals outputted from the horizontal and vertical screen driving circuits 103 and 104, so that the user can see a picture shown in Fig. 2C.

Meanwhile, as shown in Fig. 2C, so as to see a screen in which the upper, lower and left, right signal black regions ABP, BBP, LBP and RBP are deleted, when the user inputs the horizontal and vertical screen expanding mode keys, respectively, of the transmitter 106, the key signal each are converted into an infrared ray code signal, and transmitted to the deflection controller 107.

Thereafter, the deflection controller 107 recognizes the horizontal and vertical screen expanding mode signals outputted from the transmitter 106 and outputs horizontal and vertical screen expanding control signals to the deflection controller 102.

The deflection controller 102 expands the horizontal and vertical synchronous signals H_{syn} and V_{syn} in accordance with horizontal and vertical screen expanding control signals outputted from the deflection controller 107 and outputs the signals to the horizontal and vertical screen driving circuits 103 and 104.

The horizontal and vertical screen driving circuits 103 and 104 convert the horizontal and vertical synchronous signals H_{syn} and V_{syn} outputted from the deflection controller 102 into horizontal and vertical deflection signals Sₕ and Sᵥ, and output the signals to the cathode-ray tube 105.

Therefore, the cathode-ray tube 105 scans the R, G, and B color signals outputted from the signal amplifier 101 on the screen as shown in Fig. 2C by the horizontal and vertical deflection signals Sₕ and Sᵥ outputted from the horizontal and vertical deflection controller 102.

However, the conventional screen automatic expanding display apparatus for a wide screen television has disadvantages in that when transmitting a wide screen signal outputted from a broadcasting station together with a character signal, since a user controls a screen aspect ratio using a remote controller, the characters in a black region may disadvantageously be deleted together with the black region when expanding the screen horizontally or vertically using a remote controller.

### SUMMARY OF THE INVENTION

Accordingly, it is an object of the present invention to provide a screen automatic expanding display apparatus for a wide screen television, which overcome the problems encountered in a conventional screen automatic expanding display apparatus for a wide screen television.

It is another object of the present invention to provide an improved screen automatic expanding display apparatus for a wide screen television capable of detecting a wide screen signal and a character signal from a broadcasting station, moving the character signal to an active video region, and automatically expanding and displaying a reflection.

To achieve the above objects, in accordance with a first embodiment of the present invention, there is provided a screen automatic expanding display apparatus for a wide screen, which includes a trapping circuit for removing a carrier component of a color signal from an externally applied combined picture signal so as to extract a brightness signal; a clamping circuit for outputting a brightness signal having a predetermined level outputted from the trapping circuit; a level comparison circuit for comparing the brightness signal outputted from the clamping circuit with a reference voltage; and a signal judging circuit for judging a wide screen signal type contained in the combined picture signal outputted in accordance with a signal outputted from the level comparison circuit, for transmitting a control signal corresponding to the judgement to a deflection controller, and for varying horizontal and vertical synchronous signals.

To achieve the above objects, in accordance with a second embodiment of the present invention, there is provided a screen automatic expanding display apparatus for a wide screen, which includes a brightness signal stabilization circuit for outputting a digitalized value of a brightness signal at a predetermined level; a brightness signal level detection circuit for detecting level and character by comparing the digitalized value outputted from the brightness signal stabilization circuit with a reference value and for outputting first and second signals in accordance with the detection; a signal judging circuit for generating a character recognition signal and first through third enable signals in accordance with a second signal outputted the brightness signal level detection circuit and for judging a wide screen signal type contained in the combined picture signal outputted in accordance with a first signal outputted from the brightness signal level detection circuit and for transmitting a control signal in according to the judgement to a deflection circuit and for expanding or maintaining horizontal and vertical synchronous signal; a character generating circuit for converting a digitalized value outputted from the brightness signal stabilization circuit into a character color signal in accordance with a character recognition signal outputted from the signal judging circuit and a third enable signal and for outputting together with a high speed switching signal; and a high speed circuit, including a high speed switching circuit, for combining a character color signal outputted from the character generating circuit switched in accordance with a high speed switching signal outputted from the character generating circuit and the R, G, and B color signals outputted from the video processing circuit.

### BRIEF DESCRIPTION OF THE DRAWINGS

Fig. 1 is a block diagram of a conventional wide screen display apparatus for a wide screen television.

Fig. 2A is a view of a screen without a reflection adjustment of Fig. 1.

Fig. 2B is a view of a screen after a deflection adjustment of Fig. 1.

Fig. 2C is a view of a screen after a screen aspect ratio adjustment of Fig. 1.

Fig. 3 is a block diagram of a screen automatic expanding display apparatus for a wide screen television of a first embodiment according to the present invention.

Fig. 4 is a block diagram of a block diagram of a screen automatic expanding display apparatus for a wide screen television of a second embodiment according to the present invention.

Fig. 5A is a view of a screen without a reflection adjustment when a predetermined character is provided in a letter box region on the screen when a wide screen signal is applied thereto according to the present invention.

Fig. 5B is a view of a screen after an automatic reflection adjustment when a predetermined character is provided in a letter box region when a wide screen signal is applied thereto according to the present invention.

Fig. 6A is a wave form of a vertical synchronous signal of a signal judging circuit with respect to a vertical synchronous signal of Fig. 4 according to the present invention.

Figs. 6B through 6D are wave forms of a first through third enable signals with respect to a vertical synchronous signal according to the present invention.

### DETAILED DESCRIPTION OF THE INVENTION

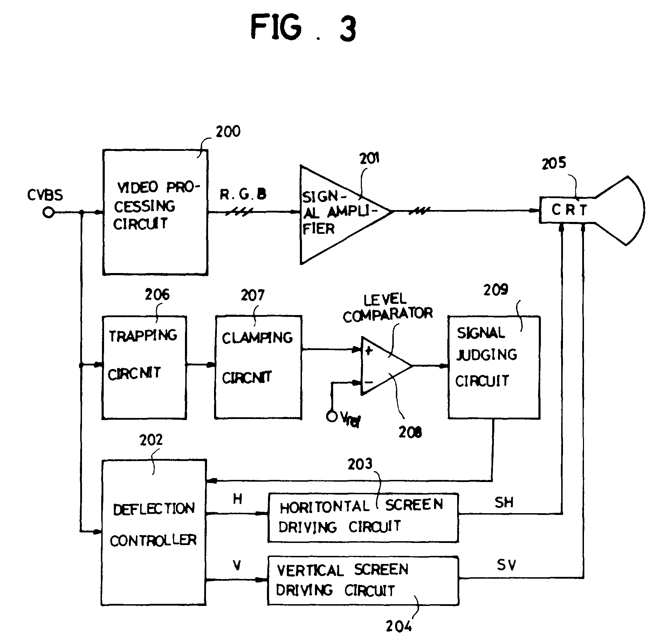

Referring to Fig. 3, a screen automatic expanding display apparatus for a wide screen television of a first embodiment according to the present invention includes a video processing unit 200 for separating a brightness signal and a color signal from a combined picture signal outputted from a broadcasting station, decoding the signal using a matrix, and outputting R, G, and B color signals, a signal amplifier 201 for amplifying the R, G, and B signals outputted from the video processing circuit 200 to a previously set gain value, a trapping circuit 206 for extracting a bright signal by removing the carrier components of the color signals of the combined picture signal CVBS, a clamping circuit 207 for maintaining the brightness signal outputted from the trapping circuit 206 to have a predetermined level, and a level comparator 208 for comparing a brightness signal having a predetermined level outputted from the clamping circuit 207 and a previously set reference voltage V_{ref} by every line, a signal judging circuit 209 for computing an average value by combining the comparison result signal, judging a wide screen signal type by counting the number of line of the black region after judging whether or not the block region is presented, and for generating a control signal in accordance with the wide screen signal type, a deflection controller 202 for expanding or maintaining the horizontal synchronous signal H and the vertical synchronous signal V in accordance with a control signal outputted from the signal judging circuit 209 after separating a horizontal synchronous signal H and a vertical synchronous signal V from the combined picture signal CVBS outputted from the video processing circuit 200 and the trapping circuit 206, a horizontal screen driving circuit 203 for converting the horizontal synchronous signal H outputted from the deflection controller 202 into the horizontal deflection signal SH, a vertical screen driving circuit 204 for converting the vertical synchronous signal V outputted from the deflection controller 202 into the vertical deflection signal SV, and a cathode-ray tube 205 for deflecting the R, G, and B color signals amplified by the horizontal and vertical screen driving circuits 203 and 204 in horizontal and vertical directions.

The operation of a screen automatic expanding display apparatus for a wide screen television according to the present invention will now be explained.

To begin with, when the combined picture signal CVBS outputted a broadcasting station is commonly applied to the video processing circuit 200, the deflection controller 202, and the trapping circuit 206, the video processing circuit 200 separates a brightness signal and a color signal from the combined picture signal CVBS, decodes the signals, processes the signals to have R, G, and B color signal components, and inputs the signals into the cathode-ray tube 205.

In addition, the trapping circuit 206 removes the carrier components from the color signal of the combined picture signal CVBS and inputs the brightness signal Y into the clamping circuit 207.

Thereafter, the clamping circuit 207 fixes the brightness signal Y outputted from the trapping circuit 206 to a predetermined level and applies the signal to a non-inverting input terminal of the level comparator 208.

The level comparator 208 compares a predetermined level value of the brightness signal outputted from the clamping circuit 208 by every line and a reference voltage V_{ref} at the inverting input terminal.

That is, if the combined picture signal CVBS is a wide screen signal, since the level of the brightness signal is black in the upper black region and the lower black region in the screen, that is, since the level of the brightness signal is low, the level comparator 208 can have a desired low voltage level within a range of a line by controlling the reference voltage V_{ref} of the inverting input terminal.

However, in the region except the upper and lower black regions, the level of the brightness signal is alternatively low and high within a range of a line, the level comparator 208 alternatively changes its voltage level between low and high voltage levels, and the brightness signal is inputted into the signal judging circuit 209.

That is, the output signal of the level comparator 208 is a high level voltage and is transmitted to the signal judging circuit 209 in a range in which the brightness signal has a high voltage level. In addition, in case that the level of the brightness signal is lower than that of the reference voltage V_{ref}, the output signal of the level comparator 208 keeps a low level and is inputted into the signal judging circuit 209.

Thereafter, the signal judging circuit 209 computes an average value by integrating the resultant value outputted from the level comparator 208 and compares the average value and a previously set reference value.

Here, the signal judging circuit 209 judges that there are no pictorial signals in the upper and lower black regions if the average value is lower than the reference value, and if the average value is higher than the reference value, the signal judging circuit 209 judges that the signals are not related to the black region and outputs a value in which its level is lower than the reference.

Thereafter, the signal judging circuit 209 counts the number of line in accordance with a value lower than the reference value. That is, it counts the number of the line of the upper and lower black regions and judges the wide screen type such as screen aspect ratios of 16-to-9, 14-to-9, or 2-to-1 in accordance with the number of the line of the upper and lower black regions and outputs corresponding screen expanding or maintaining control signals to the deflection controller 202.

The deflection controller 202 separates a horizontal synchronous signal H and a vertical synchronous V from the combined picture signal CVBS transmitted from a broadcasting station, expands the horizontal synchronous signal H and the vertical synchronous signal V in accordance with a control signal of the signal judging circuit 209, changes the forms of the horizontal synchronous signal H and the vertical synchronous signal V with a proper form for the wide screen signal, and inputs the signal into the horizontal screen driving circuit 203 and the vertical screen driving circuit 204, respectively.

Thereafter, the horizontal screen driving circuit 203 and the vertical screen driving circuit 204 converts the horizontal synchronous signal H and the vertical synchronous signal V outputted from the deflection controller 202 in a forma of a wide screen signal into the horizontal deflection signal SH and the vertical deflection signal SV and inputs the signal into the cathode-ray tube 205.

Therefore, the cathode-ray tube 205 expands the R, G and B color signals outputted from the signal amplifier 201 in accordance with horizontal and vertical deflection signal SH and SV outputted from the horizontal screen driving circuit 203 and the vertical screen driving circuit 204 in horizontal and vertical directions for displaying the signals on the screen.

The operation of a screen automatic expanding display apparatus for a wide screen television of a second embodiment according to the present invention will now be explained in more detail.

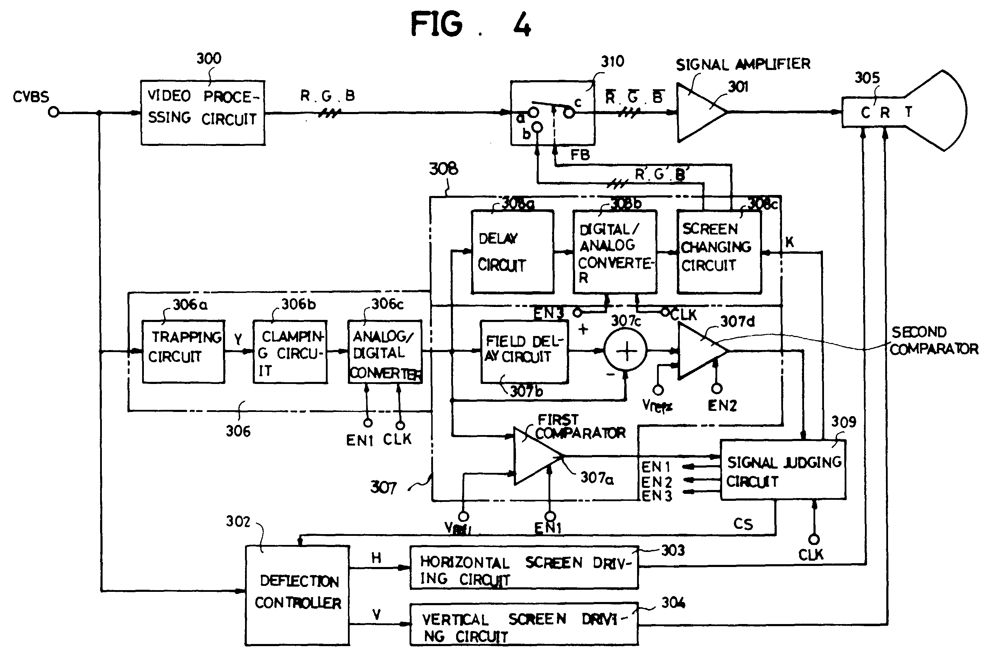

Referring to Fig. 4, a screen automatic expanding display apparatus for a wide screen television according to the present invention includes a video processing circuit 300 for separating a brightness signal and a color signal from a combined picture signal CVBS transmitted from a broadcasting station and for outputting the R, G, and B color signals through a matrix, a brightness signal stabilization circuit 306 for stabilizing the level of the brightness signal of the combined picture signal CVBS outputted from the video processing circuit 300 and for outputting the signals digitalized, a brightness signal level detection circuit 307 for detecting the level of the brightness signal and whether or not the character signal is contained therein by comparing the digitalized value obtained by the brightness signal stabilization circuit 306 and first and second reference values V_{ref1} and V_{ref2}, a signal judging circuit 309 for generating a control signal CS in accordance with a wide screen type by judging the type of a wide screen signal in accordance with a level value of the brightness signal detected by the brightness signal level detection circuit 307 and for generating first through third enable signals EN1 through EN3 by judging whether or not a character signal is contained in the black region of the wide screen signal, a deflection controller 302 for separating a horizontal synchronous signal H and a vertical synchronous signal V from a combined picture signal CVBS outputted from the video processing circuit 300 and for expanding the horizontal synchronous signal H and the vertical synchronous signal V and for outputting the signals H and V without an expansion, a horizontal screen driving circuit 303 for converting the horizontal synchronous signal H outputted from the deflection controller 302 into a horizontal deflection signal SH, a vertical screen driving circuit 304 for converting the vertical synchronous signal V outputted from the deflection controller 302 into a vertical deflection signal SV, a character generating circuit 308 for converting the digitalized value stabilized by the brightness signal stabilization circuit 306 in accordance with a character recognition signal K, a third enable signal EN3, and a clock signal CLK outputted from the signal judging circuit 309 into one-field-moved color signals R', G' and B' and for outputting the signals together with a high speed switching signal FB, a high speed switching circuit 310 for combining the character color signals R', G' and B' one-field-moved by the character generating circuit 308 with the color signals R, G and B by a high switching signal FB outputted from the character generating circuit 308, a signal amplifier 301 for amplifying the color signals /R, /G, /B containing the character signals by the high speed switching circuit 310, and a cathode-rat tube 305 for deflecting the color signals amplified in accordance with the horizontal and vertical deflection signals SH and SV outputted from the horizontal and vertical screen driving circuits 303 and 304 and for moving the character information to an active region by a field.

The brightness signal stabilization circuit 306 includes a trapping circuit 306a for removing the carrier component of the color signal from the combined picture signal CVBS so as to extract the brightness signal, a clamping circuit 306b for maintaining the brightness signal outputted from the trapping circuit 306a to have a predetermined level, and an analog/digital convertor 306c for converting the brightness signal having a predetermined level outputted from the clamping circuit 306b in accordance with an externally applied clock signal CLK and a first enable signal EN1 outputted from the signal judging circuit 309.

In addition, the brightness signal level detection circuit 307 includes a first comparator 307a for comparing the digitalized signal of the brightness signal converted by the analog/digital convertor 306c and a first reference value V_{ref1} within the upper and lower black regions of the screen in accordance with a first enable signal EN1 outputted from the signal judging circuit 309, a field delay circuit 307b for delaying the digitalized value of the brightness signal converted by the analog/digital convertor 306c by one field, a combining circuit 307c for combining the digitalized value one-field-delayed by the field delay circuit 307b and the current value outputted from the analog/digital delay circuit 306c, and a second comparator 307b for comparing the difference value outputted from the combining circuit 307c and a previously set second reference value V_{ref2} within the lower black region of the screen in accordance with a second enable signal EN2 outputted from the signal judging circuit 309.

In addition, the character generating circuit 308 includes a delay circuit 308a for delaying the digitalized value of the brightness signal converted by the analog/digital convertor 306c in every line, a digital/analog convertor 308b for converting the digitalized value corresponding to the region in which a character is contained and outputted from the delay circuit 308a into an analog signal in accordance with a third enable signal EN3 outputted from the signal judging circuit 309 and an externally applied clock signal CLK, and a character convertor 308c for converting the character signal converted into the analog signal by the digital/analog convertor 308b into the character color signals R', G' and B' and for outputting the signals together with a high speed switching signal FB.

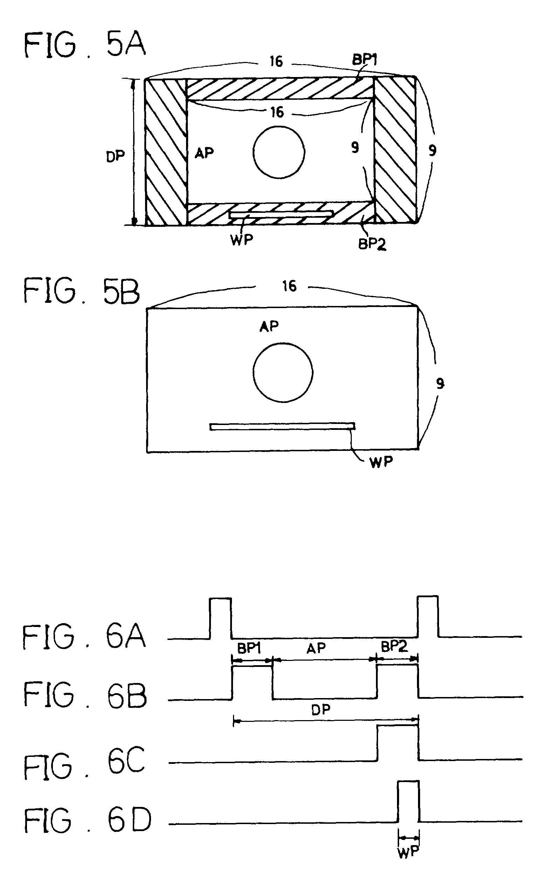

Here, the first through third enable signals EN1 through EN3 outputted from the signal judging circuit 309 are signals for timing with respect to a vertical synchronous signal shown in Fig. 6A. The first enable signal EN1, as shown in Fig. 6B, is directed to maintaining a high level voltage in the upper and lower black regions BP1 and BP2 and digitalizing the black regions using the analog/digital convertor 306c and the first comparator 307a, and the second enable signal EN2 is directed to maintaining a high level voltage in the lower black region BPe of the screen as shown in Fig. 2C and confirming whether or not the character signal is contained in the lower black region BP2 of the second comparator 307d, and the third enable signal EN3, as shown in Fig. 6D, is directed to maintaining the output of the digital/analog convertor 308b to be a high level voltage in the line in which the character is contained and converting the digitalized value corresponding to the region in which the character signal is contained into the analog signal.

The operation of a screen automatic expanding display apparatus for a wide screen television of the second embodiment according to the present invention will now be explained with reference to Figs. 5 and 6.

To begin with, when a combined picture signal CVBS outputted from a broadcasting station is commonly inputted into the video processing circuit 300, the deflection controller 302, the brightness signal stabilization circuit 306, the video processing circuit 300 separates a brightness signal and a color signal from the combined picture signal CVBS, decodes the color signals to the original signal, processing the signals into the R, G, and B color signal through a matrix, and inputs the R, G, and B color signals into a fixing terminal "a" of the high speed switching circuit 310.

Meanwhile, the brightness signal stabilization circuit 306 extract the bright signal from the combined picture signal CVBS and outputs the digitalized signals having a predetermined level.

In addition, the brightness signal stabilization circuit 306 includes the trapping circuit 306a, the clamping circuit 306b, and the analog/digital convertor 306c.

Thereafter, the trapping circuit 306a removes the carrier components of the color signal from the combined picture signal CVBS, extract the brightness signal "Y" and inputs the signals into the clamping circuit 206b.

In addition, the clamping circuit 306b controls the brightness signal "Y" to have a predetermined level and inputs the signals into the analog/digital convertor 306c.

The analog/digital convertor 306c digitally samples the brightness signals in the upper and lower black regions BP1 and BP2 among the brightness signals of the analog outputted from the clamping circuit 306b in every line in accordance with a first enable signal EN1 having a high level voltage in the upper and lower black regions BP1 and BP2 as shown in Fig. 6A and outputs the signals to the brightness signal level detection circuit 307 and the character generating circuit 308.

Thereafter, the brightness signal level detection circuit 307 compares the digitalized value converted by the analog/digital convertor 306c of the brightness signal stabilization circuit 306 with reference values V_{ref1} and V_{ref2} and detects the level of the brightness signal and whether or not the character signal is contained therein in accordance with a result of the comparison.

That is, the brightness signal level detection circuit 307 includes the first comparator 307a, the field delay circuit 307b, the combining circuit 307b and the second comparator 307d.

Thereafter, the first comparator 307a compares the digitalized value converted by the analog/digital convertor 306c of the brightness signal stabilization circuit 306 in accordance with a first enable signal EN1 of a high level voltage with a first reference value V_{ref1} and inputs the resultant value into the signal judging circuit 309.

That is, the first comparator 307a inputs the high level voltage into the signal judging circuit 309 when the digitalized value outputted from the analog/digital convertor 306c is greater than the first reference value V_{ref1}, and inputs the low level voltage into the signal judging circuit 309 when the digitalized value outputted from the analog/digital convertor 306c is smaller than the first reference value V_{ref1}.

In addition, the field delay circuit 307b receives the digitalized value outputted from the analog/digital convertor 306c, delays by a field, and inputs the value into the combining circuit 307c.

Thereafter, the combining circuit 307c computes the combined value obtained by combining the digitalized value outputted from the field delay circuit 307b and the digitalized value of the current line outputted from the analog/digital convertor 306c and inputs the combined value into the second comparator 307d.

Therefore, the level of the character signal having a high brightness level increases by twice, and the level of the lower black region except the region in which the character signal is contained does not change.

The second comparator 307d compares the combined value outputted from the combining circuit 307 in the lower black region BP2 in accordance with the second enable signal EN2 of a high level voltage outputted from the signal judging circuit 309 as shown in Fig, 6C with a previously set second reference value V_{ref2}. As a result, if the value outputted from the combining circuit 307 is greater than the second reference value V_{ref2}, the second comparator inputs the high level voltage into the signal judging circuit 309, and if the value outputted from the combining circuit 307 is smaller than the second reference value V_{ref2}, the second comparator inputs the low level voltage into the signal judging circuit 309.

Therefore, the signal judging circuit 309 integrates the resultant value outputted from the first comparator 307a of the brightness signal level detection circuit 307 so as to compute its average value and compares the average value with a previously set reference value.

Thereafter, the signal judging circuit 309 judges the line in the upper and lower black regions BP1 and BP2 as a line in which the pictorial signal are not contained if the average is lower than a reference level, and if the average value exceeds the reference level, the signal judging circuit 309 judges the line as an active region AP and outputs the values lower than the reference level.

The signal judging circuit 309 counts the number of line of the upper and lower black regions in accordance with the value lower than the reference value, recognizes the 16-to-9 wide screen signal, and inputs the screen expanding control signal with respect to the wide screen signal into the deflection controller 302.

Here, if the broadcasting station transmits 16-to-9, 14-to-9, or 2-to-1 wide screen signals, the signal judging circuit 309 performs the above-described operation and recognizes the type of a wide screen signal.

In addition, the signal judging circuit 309 detects whether or not a lower black region is presented in the screen in accordance with a result value outputted from the second comparator 307d.

Thereafter, when the signal judging circuit 309 detects the lower black region, it outputs first through third enable signals EN1 through EN3 and a character recognition signal K of a high level voltage. In addition, there is no the lower black region, the signal judging circuit 309 outputs the first through third enable signal EN1 through EN3 and a character recognition signal K of a low level voltage.

Meanwhile, the character generating circuit 308 converts the digitalized value outputted from the analog/digital convertor 306c into the character color signals R', G', and B' which is moved by one field and outputs together with a high speed switching signal FB.

That is, the character generating circuit 308 includes the delay circuit 308a, the digital.analog convertor 308b, and the character convertor 308c.

The delay circuit 308a delays the digitalized value outputted from the analog/digital convertor 306c by a predetermined time corresponding to the active region of the next field.

The digital/analog convertor 308b, as shown in Fig. 6D, converts the digitalized value, which is moved to the active region by the delay circuit 308a in the character region WP in accordance with a third enable signal EN3 of a high level voltage outputted from the signal judging circuit 309, into an analog signal value for an externally applied clock signal CLK, and inputs the signal into the character convertor 308c.

Therefore, the character convertor 308c converts the character signal, which is moved to the active region by the analog/digital convertor 308b in accordance with a character recognition signal K outputted from the signal recognition circuit 309, into the character color signals R'. G', and B' and outputs to the high speed switching circuit 310.

Here, if the character signals is not contained in the black region, the fixing terminal "c" of the high speed switching circuit 310 is connected to the driving terminal "a" in accordance with a high speed switching signal FB outputted from the character convertor 308c.

Therefore, the color signals R, G, and B outputted from the video processing circuit 300 are amplified by the signal amplifier 301 and inputted into the cathode-ray tube 305.

In addition, the deflection controller 302 separates a horizontal synchronous signal H and a vertical synchronous signal V from a combined picture signal CVBS, and expands the horizontal synchronous signal H and the vertical synchronous signal V in accordance with a control signal CS outputted from the signal judging circuit 309. That is, the horizontal synchronous signal H and the vertical synchronous signal V are changed to have a form of a wide screen signal and inputted into the horizontal screen driving circuit 303 and the vertical screen driving circuit 304.

Thereafter, the horizontal screen driving circuit 303 and the vertical screen driving circuit 304 each convert the horizontal synchronous signal H and the vertical synchronous signal V outputted from the deflection controller 302 into a horizontal deflection signal SH and a vertical deflection signal SV.

Therefore, the color signals outputted from the signal amplifier 301 are expanded in accordance with signals outputted from the horizontal screen driving circuit 303 and the vertical screen driving circuit 304 and outputted to the cathode-ray tube 305.

Meanwhile, as shown in Fig. 5A, in case that the character is presented in the lower black region BP2, the fixing terminal "c" of the high speed switching circuit 310 is connected to the driving terminals "a" and "b" at a high speed in accordance with a high speed switching signal FB of a high level voltage outputted from the character convertor 308c.

Therefore, the color signals R, G, and B outputted from the video processing circuit 300 are converted into the color signal /R, /G, and /B, in which the character color signals R', G' and B' are added thereto which are moved to the active region by the character convertor 308c through the high speed switching circuit 310, are inputted into the cathode-ray tube through the signal amplifier 301.

The cathode-ray tube 305 expands the screen, as shown in Fig. 5B, in accordance with horizontal and vertical deflection signals SH and SV outputted from the horizontal screen driving circuit 303 and the vertical screen driving circuit 304 in horizontal and vertical direction and displays characters on in the lower black region of the screen.

As described above, the screen automatic expanding display apparatus for a wide screen television according to the present invention is directed to recognizing a wide screen signal type and automatically expanding the size of the screen in accordance with the recognition in case that a character signal is not contained in the black region of the screen, and in addition, the apparatus is directed to moving the character in the black region to an active region in case that the characters are provided in the black region and removing only the black region, so that a watcher of the television can enjoy quality resolution by improving the resolution of the screen.

## Claims

1. A screen automatic expanding display apparatus for a wide screen television, comprising:
trapping means for removing a carrier component of a color signal from an externally applied combined picture signal so as to extract a brightness signal;
clamping means for outputting a brightness signal having a predetermined level outputted from said trapping means;
level comparison means for comparing said brightness signal outputted from said clamping means with a reference voltage; and
signal judging means for judging a wide screen signal type contained in said combined picture signal outputted in accordance with a signal outputted from said level comparison means, for transmitting a control signal corresponding to said judgement to deflection controlling means, and for varying horizontal and vertical synchronous signals.

2. The apparatus of claim 1, wherein said level comparison means is directed to comparing a level of a brightness signal outputted from the level comparison means with a reference voltage in every line.

3. The apparatus of claim 1, wherein said signal judging means includes: means for computing an average value by integrating the value outputted from the level comparison means in every line;
means for comparing said average value with a reference value, judging that the black region does not include the picture signal when the resultant value is lower than the reference value, judging that the black region is not provided therein when the average value is high than the reference value, and outputting a value lower than the reference value;
means for counting the number of a line in upper and lower black regions of a wide screen signal in accordance with the value lower than the reference value; and
means for judging a wide screen signal type inputted thereto in accordance with the number of a line of the upper and lower black regions and for outputting a control signal in accordance with said judgement.

4. A screen automatic expanding display apparatus for a wide screen television, comprising:
brightness signal stabilization means for outputting a digitalized value of a brightness signal at a predetermined level;
brightness signal level detection means for detecting level and character by comparing the digitalized value outputted from said brightness signal stabilization means with a reference value and for outputting first and second signals in accordance with said detection;
signal judging means for generating a character recognition signal and first through third enable signals in accordance with a second signal outputted said brightness signal level detection means and for judging a wide screen signal type contained in the combined picture signal outputted in accordance with a first signal outputted from the brightness signal level detection means and for transmitting a control signal in according to said judgement to deflection means and for expanding or maintaining horizontal and vertical synchronous signal;
character generating means for converting a digitalized value outputted from the brightness signal stabilization means into a character color signal in accordance with a character recognition signal outputted from the signal judging means and a third enable signal and for outputting together with a high speed switching signal; and
high speed means, including high speed switching means, for combining a character color signal outputted from said character generating means switched in accordance with a high speed switching signal outputted from the character generating means and the R, G, and B color signals outputted from the video processing means.

5. The apparatus of claim 4, wherein said brightness signal stabilization means includes;
trapping means for removing a color signal carrier component from a combined picture signal and for extracting a brightness signal;
clamping means for outputting said brightness signal outputted from said trapping means at a predetermined level; and
analog/digital converting means for converting a brightness signal having a predetermined level outputted from said clamping means into a digitalized value and for inputting into character generating means and brightness signal level detection means.

6. The apparatus of 4, wherein said brightness level detection means includes:
first comparing means for comparing the digitalized value converted by the analog/digital converting means in accordance with a first enable signal outputted from the signal judgement means with a first reference value and for outputting a first signal to the signal judging means;
field delay means for delaying the digitalized value by a field;
a combining circuit for combining said one-field-delayed digitalized value and the digitalized value converted by the analog/digital converting means; and
second comparison means for comparing the difference value obtained by said combining circuit in accordance with a second enable signal outputted from the signal judging means with a second reference value and for inputting a second signal into the signal judging means.

7. The apparatus of claim 4, wherein said character generating means includes:
delaying means for delaying the digitalized value for a predetermined time;
converting means for converting the digitalized value corresponding to the region in which a character is contained and outputted from a third enable signal outputted from the signal judging means and said delaying means into an analog signal; and
character converting means for converting the character signal into a character color signal and for outputting said signal to the high speed switching means together with a high speed switching signal.

8. The apparatus of claim 5, wherein said analog/digital converting means is directed to converting the brightness signal in the upper and lower black regions of the wide screen signal among the brightness signals outputted from the clamping means in accordance with a first enable signal outputted from the signal judging means.

9. The apparatus of claim 6, wherein said first comparison means is directed to comparing the digitalized value converted by the analog/digital converting means in the upper and black regions of the wide screen signal outputted in accordance with a first enable signal outputted from the signal judging means with a first reference value.

10. The apparatus of claim 6, wherein said first comparison means is directed to comparing the digitalized value converted by the analog/digital converting means with a first reference value in every line.

11. The apparatus of claim 6, wherein said second comparison means is directed to comparing the difference value combined by the combining circuit in the lower black region containing a character in accordance with a second enable signal outputted from the signal judging means with a second reference value.

12. The apparatus of claim 7, wherein said delay means is directed to delaying the digitalized value converted by the analog/digital converting means for a predetermined time corresponding to the range of the active region.

13. The apparatus of claim 7, wherein said digital/analog converting means in directed to converting the digitalized value delayed by the delay means in the region in which a character is contained in the lower black region in accordance with a third enable signal outputted from the signal judging means into an analog signal to have a form of an externally applied clock signal.

14. The apparatus of claim 4, wherein said signal judging means includes:
means for computing an average value by integrating the result value outputted from the first comparison means in every line;
means for comparing the average value with a reference value, judging the black region in which a picture signal is not provided when the average value is lower than the reference value, judging that there is not provided a black region when the average value is higher than the reference value, and for outputting a predetermined value lower than the reference value;
means for counting the number of a line in the upper and lower black regions in accordance with the value lower than the reference value; and
means for judging a wide screen signal type inputted in accordance with the number of aline of the upper and lower black regions and for outputting a control signal in accordance with the judgement.

15. The apparatus of claim 6, wherein said signal judging means includes:
means for computing an average value by integrating the result value outputted from the first comparison means in every line;
means for comparing the average value with a reference value, judging the black region in which a picture signal is not provided when the average value is lower than the reference value, judging that there is not provided a black region when the average value is higher than the reference value, and for outputting a predetermined value lower than the reference value;
means for counting the number of a line in the upper and lower black regions in accordance with the value lower than the reference value; and
means for judging a wide screen signal type inputted in accordance with the number of aline of the upper and lower black regions and for outputting a control signal in accordance with the judgement.

16. The apparatus of claim 4, wherein said signal judging means is directed to judging whether or not a character signal is provided the comparison value outputted from the second comparison means in the same manner as in claim 14.

17. The apparatus of claim 6, wherein said signal judging means is directed to judging whether or not a character signal is provided the comparison value outputted from the second comparison means in the same manner as in claim 14.

18. The apparatus of claim 4, wherein first through third enable signals outputted from said signal judging means are generated within a range of a field corresponding to a vertical synchronous signal.
